# EUROPEAN PATENT SPECIFICATION

(11) **EP 2 788 407 B1**
(45) Date of publication and mention of the grant of the patent: **30.08.2017**
(21) Application number: 11794692.1
(22) Date of filing: 05.12.2011
(51) Int. Cl.: C08J 5/00

(54) **COATED POLYMERIC PIPES AND METHOD OF PRODUCING THEM**
BESCHICHTETE POLYMERROHRE UND VERFAHREN ZU IHRER HERSTELLUNG
TUYAUX POLYMÈRES REVÊTUS ET PROCÉDÉ DE PRODUCTION DE CES DERNIERS

(43) Date of publication of application: 15.10.2014
(73) Proprietor: Blue Wave Co S.A., 1643 Luxembourg (LU)
(72) Inventor: NETTIS, Francesco, London SW1X 8HN (GB); TOMASELLI, Vanni Neri, London W1H 5ZB (GB)
(74) Representative: CSY St Albans
(86) International application number: PCT/EP2011/071806
(87) International publication number: WO 2013/083170

(56) References cited:
- BE-A1- 870 798
- CN-A- 101 513 991
- DE-A1-102008 026 313
- NL-A- 8 204 847

## Description

The present invention relates to coated pipes.

In particular, it relates to pipes made of plastics which have an internal metallic coating.

The present invention also relates to a method of manufacturing said pipes.

Metallic pipes, particularly steel pipes, are widespread across many industrial and trade sectors. For example, metallic pipes are extensively used in the oil and gas industry for moving fluids around from one location to another, or between machinery. Metallic pipes are generally used due to their reliable mechanical properties, including strength, durability and containment/non-porous characteristics.

Plastics pipes, which are lighter than metallic pipes, are also extensively used across industrial and trade sectors. For example, thermoplastic materials such as polyethylene (PE) are commonly used for water pipes. Medium density Polyethylene (MDPE) is also being used, such as in certain limited applications in the handling of domestic natural gas. Other plastics commonly used include acrylonitrile butadiene styrene (ABS), various forms of polyvinyl chloride (PVC, including PVCu, PVCc, cPVC or Corzan®), polyproplene (PPh).

PE and MDPE pipes, along with any of the other plastic pipes mentioned above, are lightweight, cheap to make (compared to steel or copper), corrosion free and generally non-permeable to fluids, whereby they can also offer suitable containment capabilities for those limited applications. They are also relatively easy to manufacture, by being extrudable. Plastics pipes, however, typically have a lower relative stiffness and strength compared to metal pipes. Further, they can be more porous than metal pipes. As a result, they often are formed with a thicker wall-thickness than the corresponding metal pipes, to compensate for these weaknesses of plastics, whereupon they can have a smaller internal cross section for a given external diameter.

To improve the operational characteristics of metallic and plastic pipes at the interface between the pipe and the contents therefor, i.e. whatever substance is to be transported therein, various types of internal liners have been applied to prior art pipes.

For example, it is known to provide a plastic liner or coating inside a metallic pipe to prevent corrosive fluid passing through that pipe from corroding the internal walls of the metallic pipe. However, it is not known to provide an internal metallic liner or coating for plastics pipes, mainly for the following reasons:
First, it is generally difficult to coat the pipe internally with the desired metal in a satisfactory manner. Furthermore, even if this is achievable, the coating will significantly increase the cost of the finished pipe, thereby making it unattractive to an end-user/customer.
Second, in most applications there is generally no reason for internally coating a pipe made of plastics, since such a pipe is already sufficiently impermeable and corrosion resistant for the applications to which such pipes are subjected. In other words, internal metallization of plastic pipes appears, at least at first glance, to be counterintuitive, at least in relation to the vast majority of applications to which plastic pipes have, to date, been used or considered appropriate.

The present invention, which is defined in appended claims 1 and 11, provides a pipe made of a plastics material having an internal metallic coating, which has usable characteristics and advantages over the pipes of the prior art.

It is a further aim of the present invention to provide pipes made of a plastics material which are internally, metallically, coated, so as to bring about advantages in relation to the transportation and distribution of compressed natural gas (CNG) at medium or low pressures, i.e. at pressures below 100 bar. Due to the properties of CNG, such applications, until now, have typically been considered "off-limits" to plastic pipes, due to the potential for gas losses through the walls of the pipes - the metallic coating, however, addresses that concern.

It is a further aim of the present invention to provide pipes made of a plastics material which are internally, metallically, coated, so as to bring about advantages in relation to the transportation and distribution of domestic natural gas at low pressures, i.e. at pressures usually used in domestic distribution applications, e.g. 95 bar or less, including pressures down to 1 barg (or 1 bar above atmospheric pressure).

It is a further aim of the present invention to provide pipes made of a plastics material which are internally, metallically, coated, and which are easy to produce, join and inspect.

According to a first aspect of the present disclosure, there is provided an internally coated pipe, wherein the pipe is made of a thermoset plastics material, the internal coating being made of a metallic material. By providing such a pipe, the strength characteristics of a thermoset plastics material (higher than typical thermoplastic plastics materials) can be usefully combined with the impermeability characteristics achievable by use of a metallic coating layer - thermoset plastics are typically less impermeable for a given thickness of material than thermoplastic plastics, and therefore most, if not all, plastic pipes used for gas delivery/distribution applications are made of thermoplastic plastics materials, such as PE and MDPE, so as to avoid undesired gas leakage through the wall of the pipes.

Preferably the pipe is for fitting in a gas distribution system, it being sized to fit with standard connectors/pipe fittings.

Preferably, said thermoset plastics material is one of: epoxy resin, polyester resin and dicyclopentadiene (DCPD) resin. These are all widely used. Further they are all easy and cheap to supply.

In preferred embodiments, said thermoset plastics material is DCPD. That is because DCPD is considered to have one of the highest tensile strengths amongst the above three materials while having their same or similar lightweight properties.

Preferably said metallic material comprises or contains one of: gold, silver, nickel, chrome, palladium, platinum, copper and aluminium, or alloys thereof. All of these metals are known to have characteristics to allow them to be used in deposition applications.

In some embodiments, the thickness, or average thickness, of the coating is less than 0.5 mm. Smaller thicknesses minimise the amount of metal used, which keeps the cost of the materials down.

In preferred embodiments, said internal coating is a film. A film will generally be sufficient to ensure impermeability for the pipe, while minimising the amount of metal needed. The film can be thinner than 1 mm, and preferably thinner than 0.5mm. In some embodiments, the thickness or average thickness of the coating (i.e. of the film), is less than 100 microns. That film can be deposited onto the inside of the plastics pipe. In preferred embodiments, however, the deposited thickness of the metallic coating is sufficient to provide impermeability to the pipe for the target fluid of containment, and at the target range of operating pressures.

In certain low-pressure applications, it is envisaged that an average thickness for the coating layer will be in the order of a few microns, i.e. not more than 10 microns. For such thin coatings, more precious materials can be used, such as gold or silver, without causing excessive or prohibitive costs. This has the advantage of making use of those materials' good impermeability characteristics, or even better impermeability characteristics than materials such as steel, whereby the thin coating thicknesses do not compromise the effectiveness of the film.

In some embodiments, the average external diameter of the pipe is in the range of between 50 and 200 mm. Such diameters provide for many fluid handling situations, and are a preferred range of diameters for pipes used for distributing CNG at pressures lower than 100 bar. Diameters down to 10mm might even be useable. An example diameter might be about 100mm.

Preferably, the thickness of the wall of the pipe is in the range of between 5 and 30 mm. Such thicknesses will provide a pipe with an adequate strength for handling fluids at low pressure. A thickness down to 1 mm might even be possible, and an example thickness might be about 10mm. Thicker wall thicknesses, such as the 30 mm walls, however, would more usually be provided for pipes that handle pressures up to 100 bar, compared to pipes designed to handle pressures of up to 10bar, or 35 bar. The overall outer diameter will also determine the necessary wall thicknesses. The necessary calculations for determining suitable wall thicknesses are well known to structural engineers, based upon hoop-strength requirements.

Preferably, the internal coating is impermeable to the component fluids of CNG, so that the gas can be safely transported. CNG typically comprises any one or more of the following constituents: C₂H₆, C₃H₈, C₄H₁₀, C₅H₁₂, C₆H₁₄, C₇H₁₆, C₈H₁₈, C₉+ hydrocarbons, CO₂, H₂S, and potentially also toluene, diesel and octane in liquid form.

Preferably, the internal coating is CNG resistant, so that the gas (i.e. the constituents thereof) cannot corrode or otherwise chemically damage the coating and the pipe.

In preferred embodiments the thermoset plastic material is translucent. This can be so that the inner metallic layer can potentially be inspected from outside of the pipe.

Preferably, the thermoset plastic material is transparent. This can also help the inspection to be facilitated.

Preferably, the pipe comprises a flange, or some other joining or attachment means (a coupling member), for attachment thereof to another pipe. This is so that pipe junctions and piping networks can be built easily.

In some embodiments, the pipe will be equipped with securing or retention means, so that the pipe can be secured or fixed to another pipe without additional, or separate, coupling means.

According to another aspect of the present disclosure, there is provided a system for distribution of CNG, the system comprising an internally coated pipe wherein the pipe is made of a thermoset plastics material, and the internal coating is made of a metallic material. The pipe can optionally have any one of the features mentioned above in relation to the first aspect of the present invention.

According to another aspect of the present disclosure, there is provided a method of producing a pipe, the method comprising the steps of: providing a pipe made of a thermoset plastics material; and depositing a metallic coating onto an internal wall of the pipe.

Preferably the pipe is integrated into a CNG distribution circuit.

Preferably the pipe contains CNG at a medium to low pressure (100 bar or less).

Preferably, the method comprises the steps of: filling the pipe with an electroless deposition reducing solution and providing an electroless deposition device in contact with the reducing solution. Such a method allows the pipe to be conveniently and cheaply produced.

There might instead be another method, without a solution, involving depositing the metal via a sprayed mixture that contains the metal, the catalyst and air (or a gas), and potentially also various other chemical compounds that are helpful or necessary for the process.

Preferably, the method comprises the step of providing a catalyst to increase the affinity between the metal and the plastics pipe.

Preferably the method comprises the step of cleaning the internal wall of the pipe in preparation for electroless deposition. The cleaning step is likely to increase the effectiveness or longevity of the metal deposition.

It might also be desireable to deposit a less affine metal as second layer over a more affine first layer, i.e. to use a second, low affinity, layer over a first, high affinity layer (whereby the second layer would be less capable of sticking to the internal wall of the pipe than the first layer). This allows that second layer's material nevertheless to be used in the pipe's construction. This would reduce costs if the first layer - the one that sticks to DCPD - is an expensive material, or if it involves an expensive deposition process.

Preferred embodiments of the present invention will now be described in greater detail, purely by way of example, for the purpose of enabling the invention to be carried out by the skilled person. Reference is made to the accompanying drawings in which:
Figure 1 is a cross sectional representation of a section of a pipe in accordance with an embodiment of the present invention;
Figure 2 is a representation of a method of depositing an internal metallic coating layer on a pipe made of a thermoset plastics material, according to another embodiment of the present invention; and
Figure 3 is a cross sectional representation of two joined flanged pipes, each pipe being in accordance with an embodiment of the present invention.

Embodiments of the present invention are described below mainly in relation to CNG applications. It will be appreciated, however, that this will not affect the general applicability of the invention, which is applicable to the transportation of numerous other fluids.

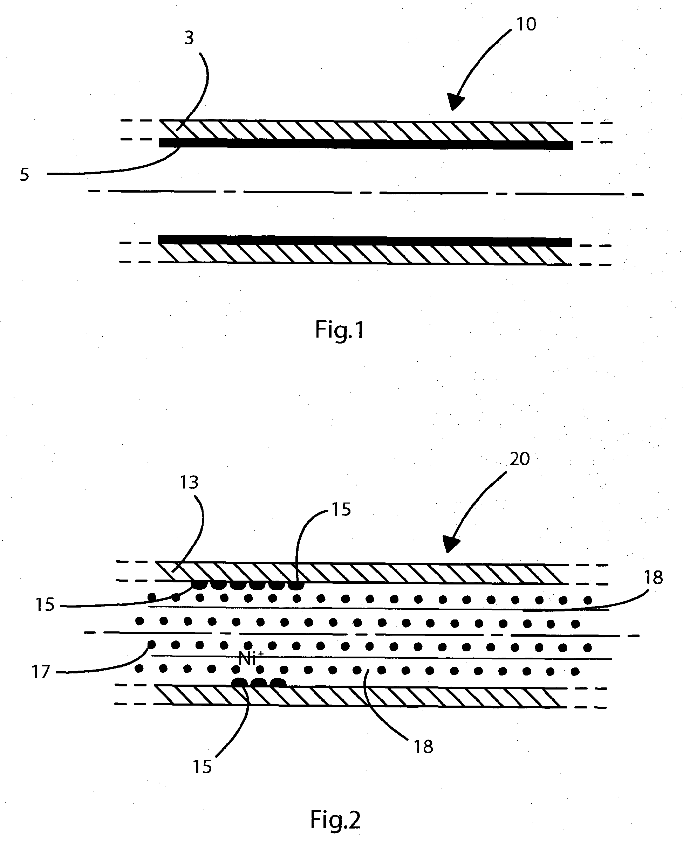

Referring to Figure 1, there is illustrated a section of pipe 10 which is part of a low pressure distribution pipe network for distributing CNG to utility points. Traditionally, such pipes are made of metal, usually steel. The pipe of Figure 1 replaces the traditional steel pipes. The pipe 10 has an outer structural shell 3 made of a thermosetting plastic material (a thermoset plastic). In preferred embodiments, the material uses a resin called DCPD. However other polymeric thermosetting materials are useable too, such as polyester and epoxy, with this not being an exhaustive list.

The choice of the polymeric material depends on the required ultimate tensile strength (or hoop strength).

It is know that thermosetting polymers have, in their in-use status, i.e. once cured, an ultimate tensile strength (σ_{thermosetting}) that can be in excess of 50 MPa. This is in contrast with the tensile strength of thermoplastic materials (σ_{thermoplastic}), which in most cases does not exceed 20 MPa. Indeed, the tensile strength of certain thermosetting materials, notably DCPD (σ_{DCPD}), can be in excess of 80 Mpa, depending on the quality of the polymerisation and the curing process. These thermosetting materials, therefore, have typically got a stronger strength for a given wall thickness.

However, thermosetting plastic materials involve a certain degree of molecular crystallisation and - for this reason - do not guarantee, at least under certain commonly experienced pipe-pressure conditions, full impermeability in respect of contacting fluids or gases. In other words they would be likely to leach (or leak) some of the content of the CNG (such as the smaller molecular constituents) into the atmosphere (or the surrounding area of the pipe). Certain thermoplastic materials, on the other hand, are generally amorphous, which gives them their comparatively higher degree of impermeability to fluids such as CNG. Therefore, for CNG applications, thermoplastic materials would provide a proven barrier against CNG penetration and leakage. However, they have not been used in such applications due to their generally unacceptable mechanical properties in these applications - they would be too weak to withstand the required transportation/distribution pressures (e.g. 95 bar).

In consideration of the above, and taking into account the operating pressure of medium to low pressure CNG lines (typically 30 to 100 bar), traditional pipes for the transport and distribution of CNG have been made of steel. Replacement with lighter, cheaper pipes made of plastics has never been contemplated, or at least it has never been achieved in a useful manner. On the one hand, thermoplastic materials would have been mechanically too weak. On the other hand, thermosetting materials would have been too permeable, even though an acceptable strength might have been provided.

Embodiments of the present invention therefore overcome the deficiencies in known plastics pipes by providing a pipe 10 as shown in Figure 1. It makes use of an internal substrate or layer 5 of metal (nickel in this case, but other metals are possible including all the metals traditionally used for electroplating applications such as copper, and other metals such as aluminium). That layer is to provide the required CNG impermeability, and also a resistance to chemical attack.

The average external diameter of the pipe can be any conventional size, including 20mm, 25mm, 32mm, 50mm, 56mm, 63mm, 75mm, 90mm, 110mm, 125mm, 160mm, 200mm, 250mm and 315mm. However, it is preferred to be up to about 10 cm.

The average thickness of the wall can also vary, depending upon the diameter of the pipe, or the required pressure containment, but the thickness will typically be chosen within a range of about 5 to 30 mm. The lower the operating pressure, and the smaller the diameter, the lower the required pipe wall thickness.

In general, the wall thickness (t) of pipes as a function of internal pressure (P) can be calculated by using the basic formula t = (Pd)/2σ_{y}, where "d" is the diameter of the pipes and σ_{y} is the yield strength (ultimate strength if a polymer) of the material the pipes are made of.

To provide an example, the range of possible diameters for CNG pipes in CNG low pressure applications (up to 100 bar, or often up to just 75 bar) is typically between approximately 0.5 inches (1.25 cm approx.) and 4 inches (10 cm approx.). These dimensions are established on the basis of design considerations, i.e. the pipes are designed to carry prescribed quantities of CNG at the required pressures. These parameters determine the flow rate of the compressed gas and, therefore, the sizes of the diameters. In certain applications, diameters above 4 inches (10 cm approx.) can be used. Consequently, on the basis of the given pressures, typical pipe wall thicknesses in the CNG industry - low pressure applications - fall in the range between approximately 1 and 15 mm, depending on the exact pressure or pressure range to be supported.

The thickness of the metallic layer will also be determined by the precise application. Factors such as CNG purity, CNG pressure and flow rate will affect the required thickness. It is however envisaged that in most applications a thickness of up to 0.5 mm (500 microns) will suffice.

The outer shell 3 of the pipe, i.e. the plastic part, can be manufactured in a variety of manners. One simple method of manufacture is rotational moulding.

Many methods of deposition of the metallic substrate 5, layer or film are also possible. One is spray coating. However, electrolytic deposition (similar in principle to electrogalvanization) can also be applied. This is particularly suitable for applications where the thickness or average thickness of the layer is desired to be particularly small, e.g. perhaps 5 to 50 microns.

One preferred method of manufacture of the above metallic internally coated thermosetting plastics pipe is illustrated with reference to Figure 2. The method is entirely chemical and does not require any electrical power input.

The pipe 20 is filled with an electroless solution 18 (horizontal shading in Figure 2). The electroless solution contains a reductive agent. The reductive agent is responsible for the reduction and solidification 15 of ions 17 of the metal within the solution 18, which form clusters 15 of metallic deposit on the wall 13 of the pipe 20. Such ions 17 are initially dissolved in the electroless solution, or can be dissolved therein from a metallic electrode which is in contact with the bath (not shown).

The process can be boosted by initial preparation of the pipe cavities, such as by cleaning or ultrasonic cleaning - removal of any form of dirt or impurities will be highly beneficial for a successful deposition and adhesion, of the metal on the inside of the pipe.

The process can also be boosted by adding to the electroless solution a chemical catalyst for the reduction reaction responsible for the deposition of the metal.

Among other methods that can be used for manufacturing the metallically internally coated thermosetting plastics pipe of the above described embodiment of the present invention is plasma coating.

Such methods for coating plastics with a metal layer are well known to production engineers, and thus need no further discussion herein.

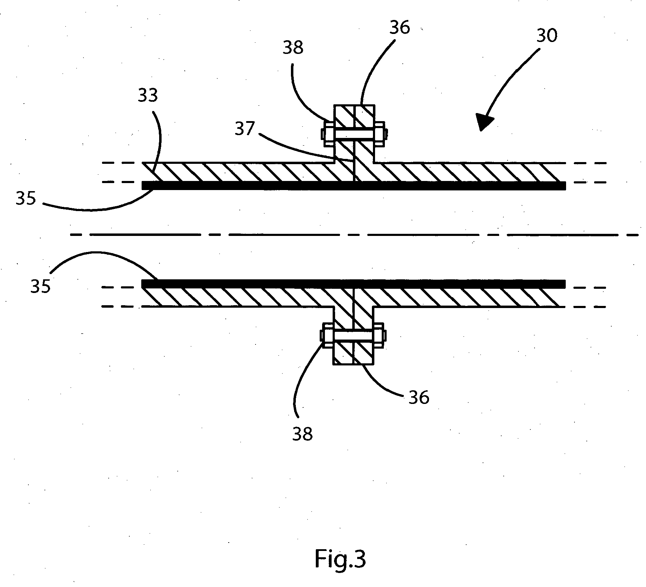

Referring now to Figure 3, a modified pipe is shown. The pipe has a joint 30 realised between two metallically coated pipes, each made of an external thermosetting plastic material 33, and an internal layer 35 or film made of a metallic material.

Each pipe comprises, at one end thereof, a flanged portion 36 or flanged end, which makes connection of the pipes possible by applying bolts 38 or other retaining or securing means, though holes in the flanges as shown in Figure 3. Typically at least two such holes are provided, and an o-ring may locate between the facing surfaces of the flanges to provide a good seal therebetween. In higher pressure applications, however, including many applications where CNG is being distributed, multiple such holes, and multiple such o-rings may be desired. For example, eight circumferentially spaced holes may be provided in each flange.

Although a preferred flange arrangement is shown and described, it will be readily apparent to a skilled person that the pipes can instead be joined according to any other method known in the art, for example by using press or push fittings, or other mechanisms by which the interfaces 37 to be joined/sealed together are so joined/sealed, e.g. by way of a suitable connection or joining means, such as portions that can be snap fitted to each other.

The above description has concentrated on industrial CNG applications. However, it is clear that the pipes and piping systems of embodiments of the present invention can also be successfully employed in domestic environments, for example for domestic delivery of natural gas. Domestic natural gas pipes are usually made of copper. There are however examples of domestic natural gas pipes made of thermoplastic materials such as PE or MDPE. Domestic natural gas pipes typically connect a gas delivery point (the point where the gas is metered) with a gas appliance such as a boiler or gas cooking range.

The pipes, and particularly copper pipes since they are typically less flexible than plastic ones, have lots of joints, and it would be desired to make each joint inspectable.

The pipes of embodiments of the present invention may successfully replace these traditional domestic gas pipes. They would be sufficiently impermeable to be suitable for the application. Further, they would be lighter and cheaper to manufacture compared to existing copper pipes. They would also be stronger than current pipes made of a thermoplastic material, such as PE and MDPE (medium density polyethylene) pipes.

Configurations where less joining is required are also possible. For example, an elbow can be integrally formed in a pipe, rather than being formed by means of an elbow joint.

An additional but considerable advantage connected with the pipes of embodiments of the present invention arises when the thermosetting material is translucent (or even better transparent) to light. Thermoplastic plastic materials are typically generally opaque to the light, due to their amorphous structure. Thermoset plastics, however, can be provided as a translucent material.

If the external shell of the pipe is translucent or transparent, the internal layer or film of metallic material can be inspected from outside of the pipe, and defects such as cracks, delaminations, deposition defects, metallic layer porosity or pitting and metallic layer corrosion can potentially be easily detected without any internal inspection (internal inspections being something that is difficult or costly to arrange).

These new pipes can carry a variety of gases, such as raw gas straight from a bore well, including raw natural gas, e.g. when compressed - raw CNG or RCNG, or H₂, or CO₂ or processed natural gas (methane), or raw or part processed natural gas, e.g. with CO₂ allowances of up to 14% molar, H₂S allowances of up to 1,000 ppm, or H₂ and CO₂ gas impurities, or other impurities or corrosive species. The preferred use, however, is CNG transportation, be that raw CNG, part processed CNG or clean CNG - processed to a standard deliverable to the end user, e.g. commercial, industrial or residential.

CNG can include various potential component parts in a variable mixture of ratios, some in their gas phase and others in a liquid phase, or a mix of both. Those component parts will typically comprise one or more of the following compounds: C₂H₆, C₃H₈, C₄H₁₀, C₅H₁₂, C₆H₁₄, C₇H₁₆, C₈H₁₈, C₉+ hydrocarbons, CO₂ and H₂S, plus potentially toluene, diesel and octane in a liquid state, and other impurities/species.

Embodiments of the present invention as described above therefore provide numerous advantages over both prior art metal pipes, and prior art plastic pipes.

Embodiments of the present invention have been described above purely by way of example. Modifications in detail may be made to the described embodiments within the scope of the claims appended hereto.

## Claims

1. An internally coated pipe for transportation of compressed natural gas (CNG), wherein the pipe is made of a thermosetting plastic material comprising dicyclopentadiene (DCPD) resin; and,
an internal coating (5) for containing the CNG, the internal coating being a metal.

2. An internally coated pipe according to claim 1, wherein said metal comprises at least one of: gold, silver, nickel, chrome, palladium and platinum, or one of more alloys thereof.

3. An internally coated pipe according to claim 1 or claim 2, wherein said internal coating (5) is a film, wherein the average thickness of said film is preferably less than 0.5 mm; preferably less than 100 microns; or, preferably not more than 10 microns.

4. An internally coated pipe according to any one of the preceding claims, wherein the pipe is adapted to bear CNG pressures of up to 100 bar, and the internal coating (5) is impermeable to CNG at pressures of up to 100 bar.

5. An internally coated pipe according to any one of the preceding claims, wherein the average diameter of the pipe falls within the range of between 50 and 200 mm.

6. An internally coated pipe according to any one of the preceding claims, wherein the thickness of the wall of the pipe falls within the range of between 5 and 30 mm.

7. An internally coated pipe according to any one of the preceding claims, wherein the internal coating (5) is impermeable to C2H6, C3H8, C4H10, C5H12, C6H14, C7H16 and C8H18 at pressures of up to 100 bar.

8. An internally coated pipe according to any one of the preceding claims, wherein the internal coating (5) is CNG resistant.

9. An internally coated pipe according to any one of the preceding claims, wherein the thermosetting plastic material is translucent or transparent.

10. A system for low pressure distribution of CNG, the system comprising a CNG pathway comprising an internally coated pipe according to any one of the preceding claims.

11. A method of producing an internally metallically coated thermoplastic pipe for CNG transportation, the method comprising the steps of:
providing a pipe made of a thermosetting plastic material comprising dicyclopentadiene (DCPD) resin; and,
depositing an internal coating (5) for containing the CNG onto an internal wall of the pipe, said internal coating (5) being a metal.

12. A method according to claim 11, further comprising the steps of:
filling the pipe with an electroless deposition reducing solution; and,
providing an electroless deposition electrode in contact with the reducing solution.

13. A method according to claim 11 or claim 12, further comprising the step of:
providing a catalyst to increase the affinity between the metal for deposition and the thermosetting plastic material of the pipe.

14. A method according to claim 11, claim 12 or claim 13, the method further comprising the step of:
cleaning the internal wall of the pipe in preparation for electroless deposition.

15. A method according to any one of claims 11 to 14, wherein the pipe is in accordance with any one of claims 1 to 9.

16. A method of transporting or distributing compressed natural gas (CNG) at pressures below 100 bar, wherein the method comprises using one or more internally coated pipes according to any one of claims 1 to 9.

## Patentansprüche

1. Innenbeschichtetes Rohr für die Beförderung von Erdgas (Compressed Natural Gas, CNG), wobei das Rohr aus einem Duroplast hergestellt ist, Dicyclopentadien(DCPD)-Harz umfassend; und
eine Innenbeschichtung (5), um das CNG zu umfassen, wobei die Innenbeschichtung ein Metall ist.

2. Innenbeschichtetes Rohr nach Anspruch 1, wobei das Metall wenigstens eines der folgenden umfasst: Gold, Silber, Nickel, Chrom, Palladium und Platin, oder eine oder mehrere Legierungen davon.

3. Innenbeschichtetes Rohr nach Anspruch 1 oder 2, wobei die Innenbeschichtung (5) ein Film ist, wobei die durchschnittliche Dicke des Films vorzugsweise kleiner ist als 0,5 mm, vorzugsweise kleiner als 100 Mikron oder vorzugsweise nicht größer als 10 Mikron.

4. Innenbeschichtetes Rohr nach einem der vorstehenden Ansprüche, wobei das Rohr CNG-Druckwerten von bis zu 100 bar standhalten kann, und wobei die Innenbeschichtung (5) für CNG bei Druckwerten von bis zu 100 bar undurchlässig ist.

5. Innenbeschichtetes Rohr nach einem der vorstehenden Ansprüche, wobei der durchschnittliche Durchmesser des Rohrs zwischen 50 und 200 mm liegt.

6. Innenbeschichtetes Rohr nach einem der vorstehenden Ansprüche, wobei die Dicke der Wand des Rohrs zwischen 5 und 30 mm liegt.

7. Innenbeschichtetes Rohr nach einem der vorstehenden Ansprüche, wobei die Innenbeschichtung (5) bei Druckwerten von bis zu 100 bar undurchlässig ist für C2H6, C3H8, C4H10, C5H12, C6H14, C7H16 und C8H18.

8. Innenbeschichtetes Rohr nach einem der vorstehenden Ansprüche, wobei die Innenbeschichtung (5) CNG-beständig ist.

9. Innenbeschichtetes Rohr nach einem der vorstehenden Ansprüche, wobei der Duroplast lichtdurchlässig oder transparent ist.

10. System zur Niederdruckverteilung von CNG, wobei das System einen CNG-Weg umfasst, der ein innenbeschichtetes Rohr nach einem der vorstehenden Ansprüche umfasst.

11. Verfahren zur Herstellung eines metallisch innenbeschichteten thermoplastischen Rohrs für die Beförderung von CNG, wobei das Verfahren die folgenden Schritte umfasst:
Bereitstellen eines Rohrs aus einem Duroplast, Dicyclopentadien(DCPD)-Harz umfassend; und
Abscheiden einer Innenbeschichtung (5), um das CNG zu umfassen, auf eine Innenwand des Rohrs, wobei die Innenbeschichtung (5) ein Metall ist.

12. Verfahren nach Anspruch 11, ferner die folgenden Schritte umfassend:
Füllen des Rohrs mit einer stromlosen Abscheidung-Reduktionslösung; und
Bereitstellen einer stromlosen Abscheidungselektrode in Kontakt mit der Reduktionslösung.

13. Verfahren nach Anspruch 11 oder 12, ferner den folgenden Schritt umfassend:
Bereitstellen eines Katalysators zur Steigerung der Affinität zwischen dem Metall für die Abscheidung und dem Duroplast des Rohrs.

14. Verfahren nach Anspruch 11, 12 oder 13, wobei das Verfahren ferner den folgenden Schritt umfasst:
Reinigen der Innenwand des Rohrs in Vorbereitung auf die stromlose Abscheidung.

15. Verfahren nach einem der Ansprüche 11 bis 14, wobei das Rohr einem der Ansprüche 1 bis 9 entspricht.

16. Verfahren zur Beförderung oder Verteilung von Erdgas (Compressed Natural Gas, CNG) auf Druckwerten von unter 100 bar, wobei das Verfahren die Verwendung eines oder mehrerer innenbeschichteter Rohre nach einem der Ansprüche 1 bis 9 umfasst.

## Revendications

1. Tuyau revêtu à l'intérieur destiné au transport de gaz naturel comprimé (GNC), le tuyau étant en matériau plastique thermodurcissable comprenant de la résine de dicyclopentadiène (DCPD) ; et,
un revêtement intérieur (5) permettant de contenir le GNC, le revêtement intérieur étant un métal.

2. Tuyau revêtu à l'intérieur selon la revendication 1, ledit métal comprenant au moins l'un parmi : or, argent, nickel, chrome, palladium et platine, ou un ou plusieurs de leurs alliages.

3. Tuyau revêtu à l'intérieur selon la revendication 1 ou 2, ledit revêtement intérieur (5) étant un film, l'épaisseur moyenne dudit film étant de préférence inférieure à 0,5 mm ; de préférence inférieure à 100 microns ; ou, de préférence pas plus de 10 microns.

4. Tuyau revêtu à l'intérieur selon l'une quelconque des revendications précédentes, le tuyau étant conçu pour supporter des pressions de GNC jusqu'à 100 bar, et le revêtement intérieur (5) étant imperméable au GNC à des pressions jusqu'à 100 bar.

5. Tuyau revêtu à l'intérieur selon l'une quelconque des revendications précédentes, le diamètre moyen du tuyau étant compris entre 50 et 200 mm.

6. Tuyau revêtu à l'intérieur selon l'une quelconque des revendications précédentes, l'épaisseur de la paroi du tuyau étant comprise entre 5 et 30 mm.

7. Tuyau revêtu à l'intérieur selon l'une quelconque des revendications précédentes, le revêtement intérieur (5) étant imperméable au C2H6, C3H8, C4H10, C5H12, C6H14, C7H16 et C8H18 à des pressions jusqu'à 100 bar.

8. Tuyau revêtu à l'intérieur selon l'une quelconque des revendications précédentes, le revêtement intérieur (5) étant résistant au GNC.

9. Tuyau revêtu à l'intérieur selon l'une quelconque des revendications précédentes, le matériau plastique thermodurcissable étant translucide ou transparent.

10. Système de distribution à basse pression de GNC, le dispositif comprenant un chemin de GNC comprenant un tuyau revêtu à l'intérieur selon l'une quelconque des revendications précédentes.

11. Procédé de production d'un tuyau thermoplastique à revêtement intérieur métallique destiné au transport de GNC, le procédé comprenant les étapes consistant à :
fournir un tuyau en un matériau plastique thermodurcissable comprenant de la résine de dicyclopentadiène (DCPD) ; et,
déposer le revêtement intérieur (5) permettant de contenir le CNG sur une paroi intérieure du tuyau, ledit revêtement intérieur (5) étant un métal.

12. Procédé selon la revendication 11, comprenant en outre les étapes consistant à :
remplir le tuyau avec une solution de réduction de dépôt autocatalytique ; et,
fournir une électrode de dépôt autocatalytique en contact avec la solution de réduction.

13. Procédé selon la revendication 11 ou 12, comprenant en outre l'étape consistant à :
fournir un catalyseur pour augmenter l'affinité entre le métal destiné au dépôt et le matériau plastique thermodurcissable du tuyau.

14. Procédé selon la revendication 11, 12 ou 13, le procédé comprenant en outre les étapes consistant à :
nettoyer la paroi intérieure du tuyau en préparation du dépôt autocatalytique.

15. Procédé selon l'une quelconque des revendications 11 à 14, le tuyau étant selon l'une quelconque des revendications 1 à 9.

16. Procédé de transport ou de distribution de gaz naturel comprimé (GNC) à des pressions inférieures à 100 bar, le procédé comprenant l'étape consistant à utiliser un ou plusieurs tuyaux à revêtement intérieur selon l'une quelconque des revendications 1 à 9.
